# EUROPEAN PATENT APPLICATION

(11) **EP 1 548 912 A1**
(43) Date of publication of application: **29.06.2005**
(21) Application number: 04029953.9
(22) Date of filing: 17.12.2004
(51) Int. Cl.: H02J 9/00, H01M 2/20, H01R 13/28

(54) **Modular uninterruptible power supply with adaptation of power by stackable modules**

(30) Priority: 24.12.2003 IT MI20032599
(71) Applicant: Fabbrica Italiana Accumulatori Motocarri Montecchio - F.I.A.M.M. S.p.A., 36075 Montecchio Maggiore (Vicenza) (IT)
(72) Inventor: Lodi, Giuseppe, 36126 Verona (IT)
(74) Representative: Lecce, Giovanni

(57) **Abstract**

A modular and sectional power station (10), which can be used particularly in emergency conditions to feed electric and electronic equipments, comprising at least two electric modules (12) and at least a power and control unit (39), said electric modules being constituted by one or more batteries or electric units (12') integrated into a containment casing (16) aligned among them on the same level and electrically connected through connection means (14). The base surface of said at least two electric modules (12) being constant at the change of the electric power which can be supplied in time.

## Description

The present invention refers to a modular and sectional power station.

More particularly, the present invention refers to a power station as defined above for use in emergency conditions for a temporary feeding of electric/electronic equipments of various kinds. These equipments can be for example constituted by anti-theft or video surveillance devices, heating and phone units, computer networks and emergency lighting systems installed both in conventional dwellings and offices, laboratories, professional firms or communities.

The power station of the present invention can be used as an autonomous unit, can be moved and positioned anywhere according to the needs or, it can be advantageously used as an integrated element in standard electric cupboards/panels.

It is known that the installation of electrically fed equipments requires, particularly in working environments, the constant maintenance of the serviceability of components and, for this reason, support means must be provided in case of emergency conditions, i.e. in cases wherein mains interruptions occur.

For this purpose, collateral support systems have been designed and they are generally constituted by a plurality of batteries assuring the continuity of operations in temporary emergency conditions.

These systems or auxiliary power stations are made of stand-alone and portable elements that are electrically connected to the equipments they are dedicated to, or they are directly and steadily installed in nearby electric cupboards/panels or in rooms next to the ones wherein said equipments are placed.

This latter solution configuring the preferred result according to the practical and functional point of view, currently shows important drawbacks from the practical implementation point of view as it requires specific and difficult arrangements.

Therefore, an auxiliary power station wherein the various components are placed into a standard containment cupboard/panel should be designed and manufactured in a targeted and efficient way according to the specific requirements as for installation and accessibility for maintenance or increase of the installed power.

According to these requirements, the installation is difficult and gives rise to rigid systems as possible downsizings with the integration of additional components are extremely complex. The containers or cupboards/panels housing the elements making the power station are standardized as for size and capacity and if requirements change, drastic interventions on the equipment are usually required. Moreover, it should be noticed that in these auxiliary systems the installed power is strictly connected to the overall dimensions or base surface of the single or multiple electric elements and their possible extensions compulsorily lead to a complete downsizing of the facility.

Even the connection to a plurality of electric elements or batteries among them also implies difficult operations with the result of increasing difficulties in first installation and reset interventions in case of extension or maintenance.

Moreover, it should be noticed that the installation of the known systems requires the intervention of at least two operators due to the considerable weight of each single accumulator or battery.

Object of the present invention is to solve the above-mentioned drawbacks.

More particularly, object of the present invention is the provision of a power station for use in emergency conditions to be especially installed into standard electric cupboards/panels as for size and capacity, wherein the various components are easily and efficiently placed by one operator for their reduced unit weight without originally difficulties and can be also quickly modified as for their integration development according to specific requirements.

A further object of the invention is the provision of a power station wherein the base surface or basic overall size of each electric element is independent from the changeable power installed.

Another object of the invention, which is not the last one, is the provision of a modular station allowing the fast connection of the reciprocal electric components at any time, thus avoiding difficult interventions both during the first installation and in subsequent times.

A further object of the invention is the provision of a power station that can assure a high reliability level in time, can be easily manufactured and at low costs.

These and other purposes are reached by the power station of the present invention, to be used particularly in emergency conditions to feed electric and electronic equipments and is mainly characterized in that it comprises at least two electric modules and at least a power and control unit; said electric modules are constituted by one or more batteries or electric units into a containment casing aligned among them on the same level and electrically connected through plate-shaped elements; the base surface of said at least two electric modules is constant at the change of the electric power that can be supplied in time.

The manufacturing and functional features of the power station of the present invention can be better understood from the following description, wherein reference is made to the attached tables of drawing representing a preferred embodiment which is given only by way of non-limitative example and wherein:
Figure 1 is a front schematic view of the power station of the present invention, wherein the components are separate among them;
Figure 2 is a front schematic view of the same power station wherein the components are grouped among them;

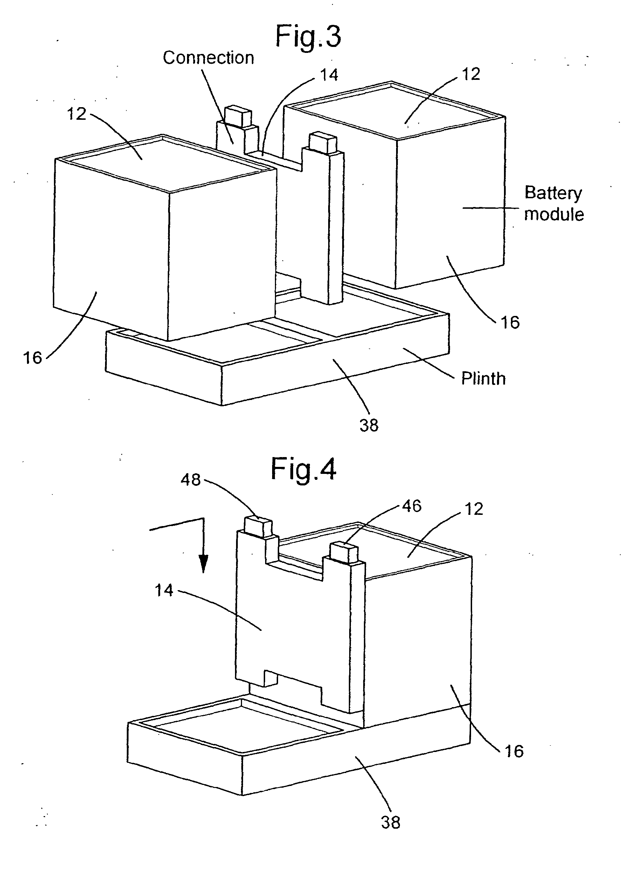

Figure 3 is a schematic perspective view of the components of a module and of the support base of the power station of the present invention;
Figure 4 schematically shows a perspective view of an enlarged detail of the module of the previous Figure;
Figure 5 schematically shows a perspective view of one of the electric units with casing of one of the modules of the power station;
Figure 6 is a front perspective view of the connection element of two electrical units of the same power station;

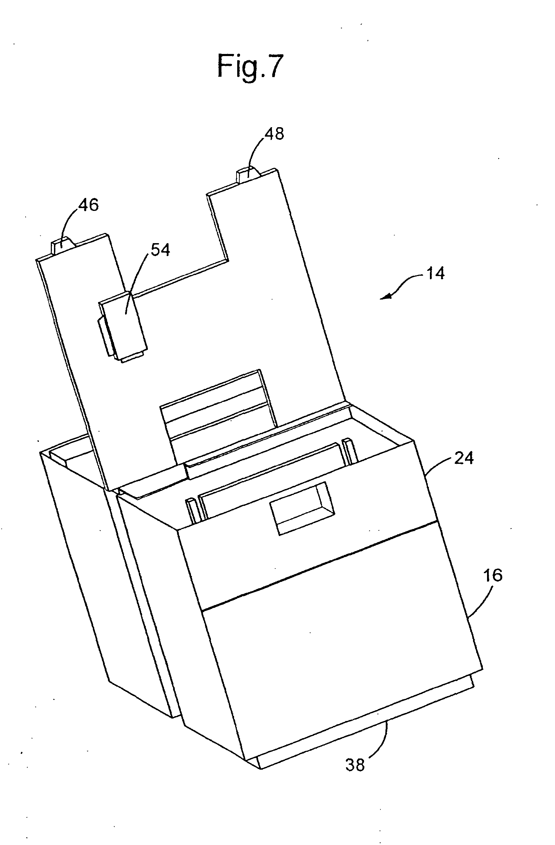

Figure 7 is a schematic perspective view of said connection element and of the relevant two electric units that are connected among them;
Figure 8 is a schematic perspective view of a half-part of said connection element;

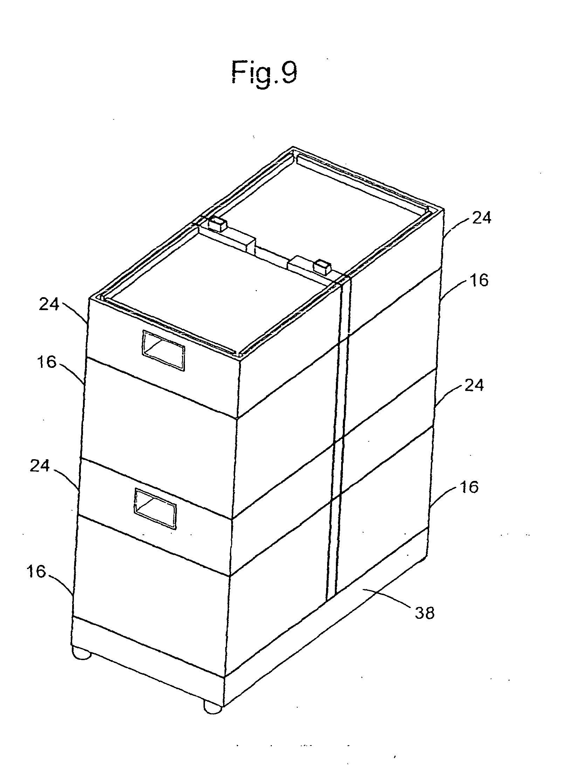

Figure 9 is a perspective, schematic view of a set of four modules assembled among them;
Figure 10 is a schematic perspective view of the power unit integrated into an electric cupboard/panel according to a possible configuration as for the number of modules grouped among them;
Figure 11 is a perspective schematic view of the power station of the present invention;

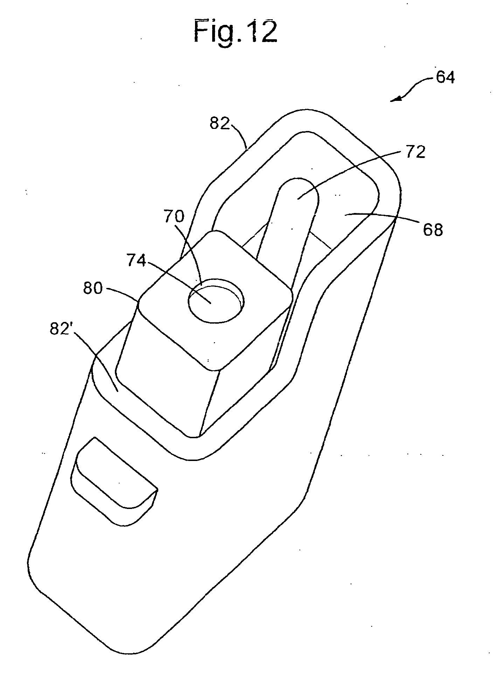

Figure 12 is a perspective schematic view of one of the connectors integrated into the connection element of the power station according to a preferred embodiment;

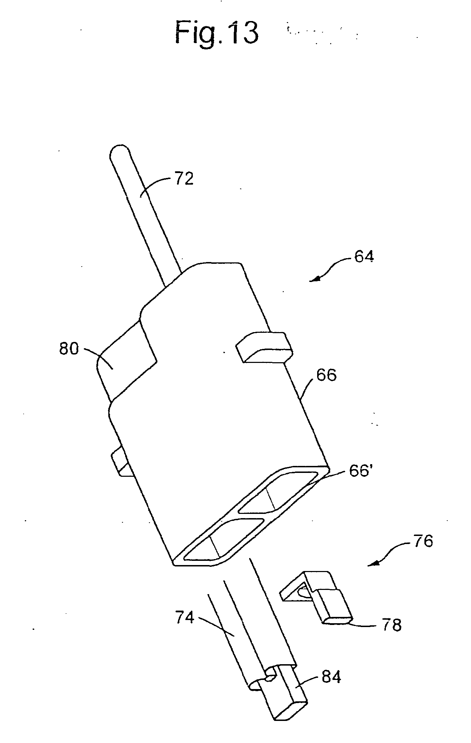

Figure 13 is a schematic exploded view of the same connector;

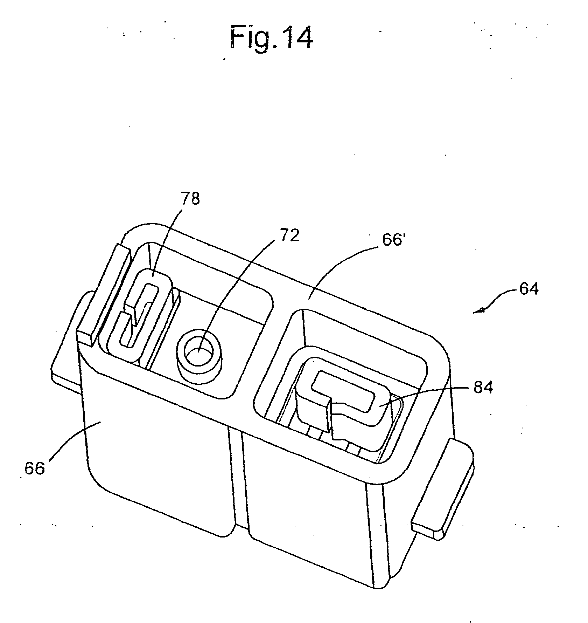

Figure 14 is a perspective view from the lower side of the same connector;

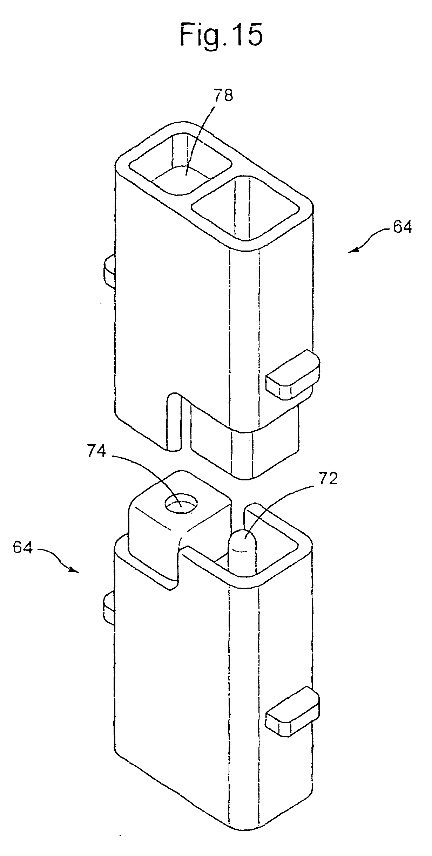

Figure 15 is a perspective schematic view of two connectors positioned for the reciprocal connection;
Figure 16 is a perspective schematic view of two connectors coupled between them;
Figure 17 is a perspective schematic view of the connection element and of a part of the relevant connectors in working position;
Figure 18 is a perspective schematic view from the inner side of a half-part of said connection element, to highlight the wiring harness through the single connectors.

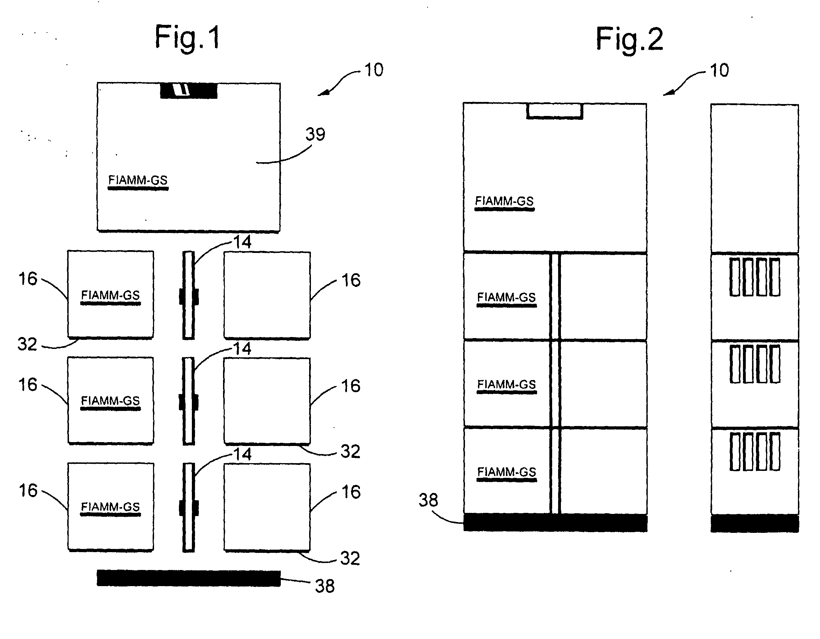

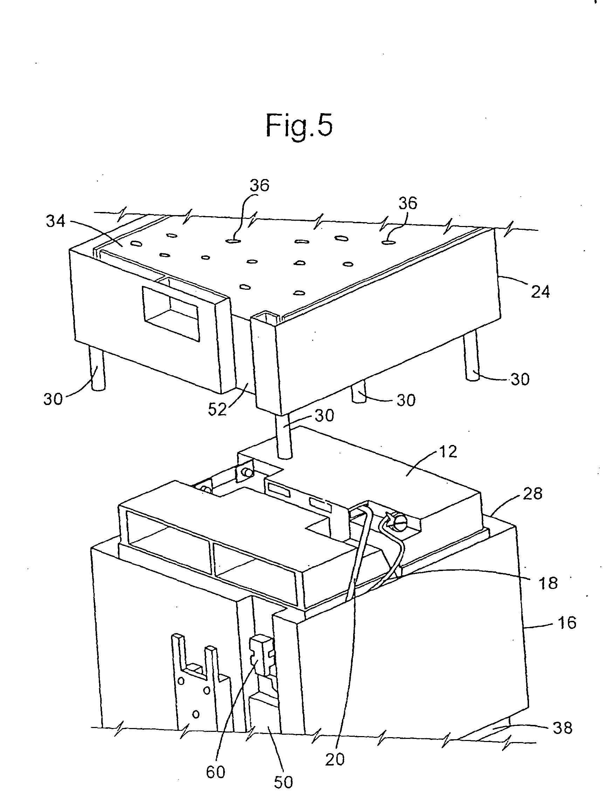

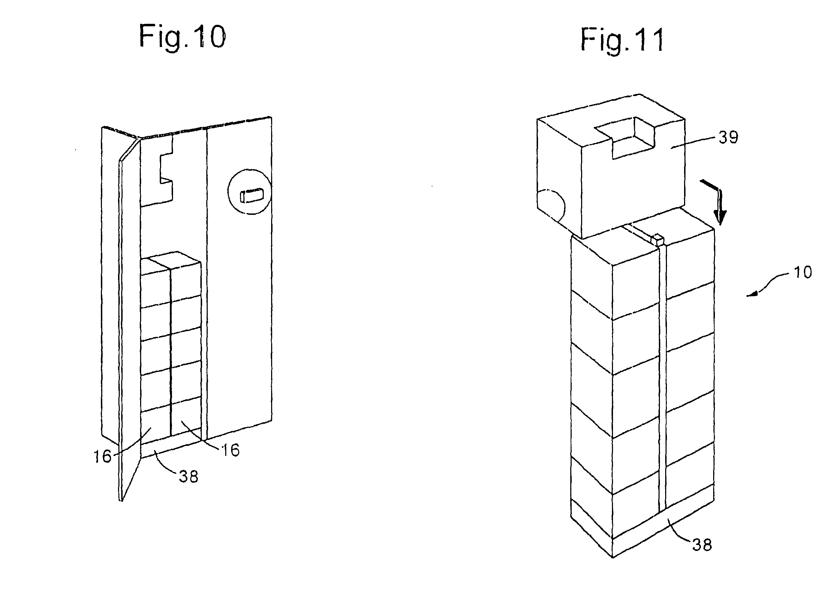

With reference to the above-mentioned Figures, the power station of the present invention, marked in its whole with 10 in Figures 1, 2 and 11, comprises at least two electric modules 12 constituted by at least two batteries or electric units 12' which are substantially known in themselves and singularly integrated into a containment casing 16 and electrically connected among them by a plate-shaped element 14 described here below. Said containment casing, which is preferably made of plastic material, is formed by a quadrangular-based body 16 with a cup configuration delimiting each of the electric units 12 along the base and the side surface and from which the upper face of the same units wherein the conventional electric cables, marked with 18 and 20 in Figure 5, are integral with project in the upper part for a limited portion.

A lid 24 is matched with the body 16, said lid covers the upper exposed side of the electric units 12 and aligns with its lower edge 26 to the upper edge 28 of the same body 16; from the lower open base of the lid 24 integral projections 30 project, they are, by way of example, pin or rod-shaped and make the driving, centring and stabilization means of the same lid compared to the underlying body 16 wherein they abut in correspondence with the vertexes. The base of the body 16 is provided with a peripheral lowering forming a curb 32 whose extension, as for the surface, is slightly lower than the global one of the same body; the upper side or base of the lid 24 marked with 22, parallely defines a complementary lowering 34, forming the housing and stabilization seat of a further body 16 in case of overlapping of two or more electric modules 12, as described here below. Said upper base 22 of the lid 24 is advantageously provided with pass-through holes or slits 36 of any shape and development to allow the passage of the air for ventilation. The two electric modules 12 are advantageously overlapped by and connected to other similar couples of batteries and supported in their lower part by a plate 38 or base which is peripherally and complementarily configured to the base of the body 16 with reference to the curb 32.

The set with more modules is matched with an element 39 consisting in a power and control unit connected to any means suitable for the mentioned set of modules 12 and forms, at the same time, a covering and completing element of the set from the aesthetical point of view. The power and control unit 39 comprises, for example, the electronic part which is known in itself for the operation of the power station 10, or it consists in a unit to adjust the voltage or in any other device of the known type suitable for the interaction with the same station 10.

The plate-shaped element 14 constitutes the electric connection means of two units 12 forming as a whole a module of the power station of the present invention. Typically, each level formed by two electric modules 12 configures a power of 700 Watt x 40' or 2100 Watt x 7' to a voltage of 12V-18A/h.

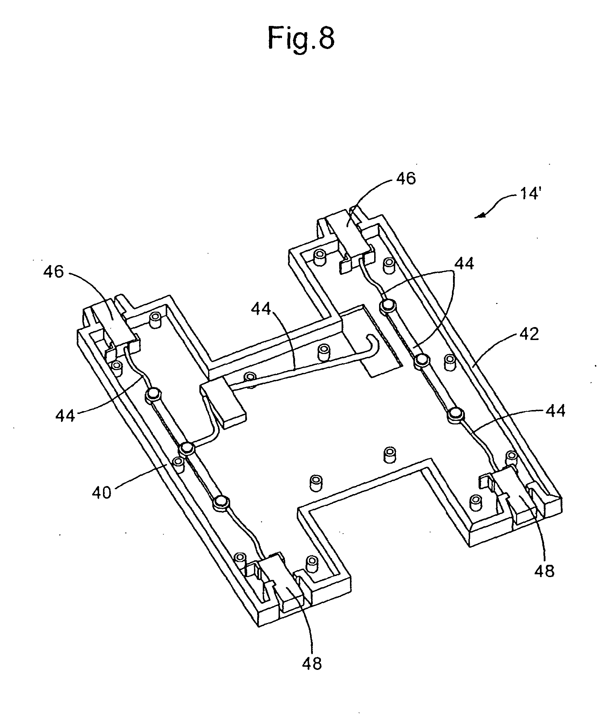

According to the preferred embodiment given by way of example shown in Figures, said plate-shaped element consists in a box-shaped diaphragm with a substantially "H"-shaped configuration made of plastic material and formed by two complementary half-shells which are jointly fixed between them or by equivalent suitable means; one of said half-shells is shown in detail in Figure 8 and is marked in its whole with 14'. The opposite and parallel branches 40, 42 of the plate-shaped element 14 are developed in height for a portion which substantially corresponds to the height of the casing or body 16 coupled with the relevant lid 24; at least one of the half shells 14' of said element 14 is provided with electric connection means 44 such as cables, reeds and/or conductor terminals on its inner side, connected to terminals 46, 48 which respectively project from the upper side of the branches 40 and 42 or align to the lower side of the same branches and are possibly spaced from their outer edge for a limited portion.

The plate-shaped elements 14 electrically connect at least two modules 12 coupled and placed among them on the same horizontal level and allow the matching of further couples of similar modules 12 overlapped to the first ones which are also electrically connected. For this purpose, the single casings or bodies 16 and their lids 24, on a side or face, are provided with a vertically developed shaped notch 50, 52 having a rectangular configuration in order to carry out this connection. In particular, as schematized in Figures from 4 to 7, the bodies 16 with lid 24 and the plate-shaped elements 14 define projections or seats for the joint or elastic pressure coupling of said terminals 46, 48 between them, which are interposed between each couple of electric modules 12 placed on the same level.

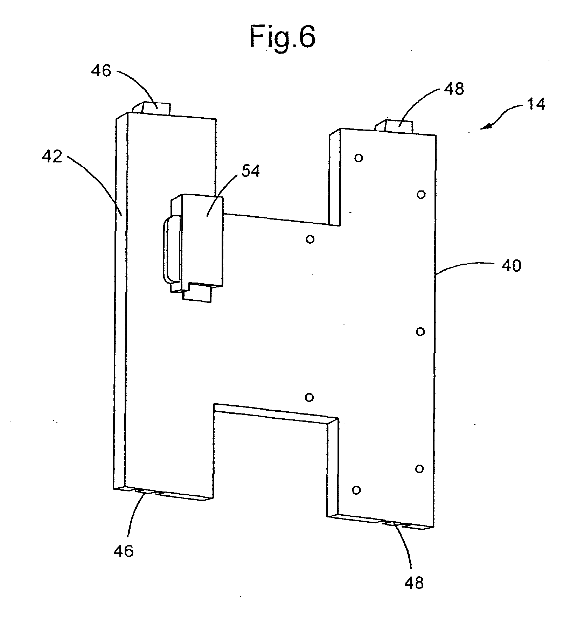

On the opposite sides the same plate-shaped elements 14 are provided with similar fast connection or joint means of two modules 12 placed on the same level, said means, schematized with 54 in Figure 6, consist in a box-shaped protuberance whose shape and development are compatible with the notch 50 and or 52 of the body 16 and of the lid 24, to which at least a termination formed by the cited electric connection means 44 arrives. In a parallel way, from the notch 50 of the body 16 at least an electric connection contact 60 projects and develops from cables 18 and 20 of each of the modules 12.

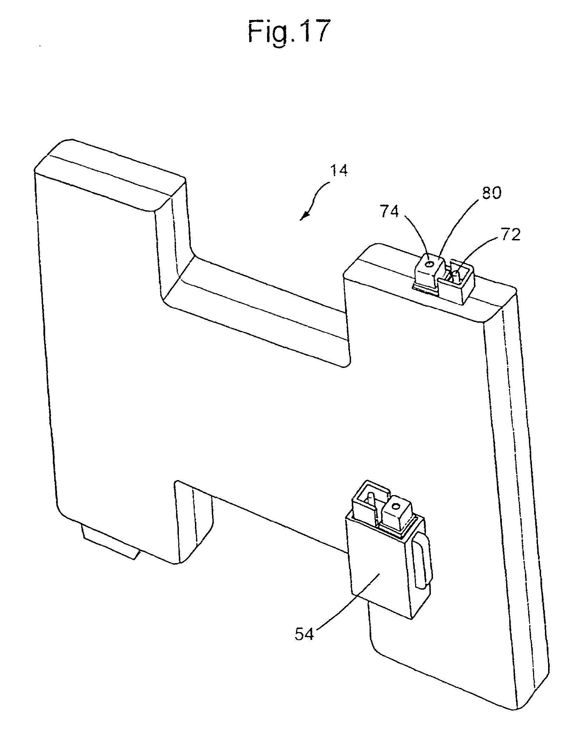

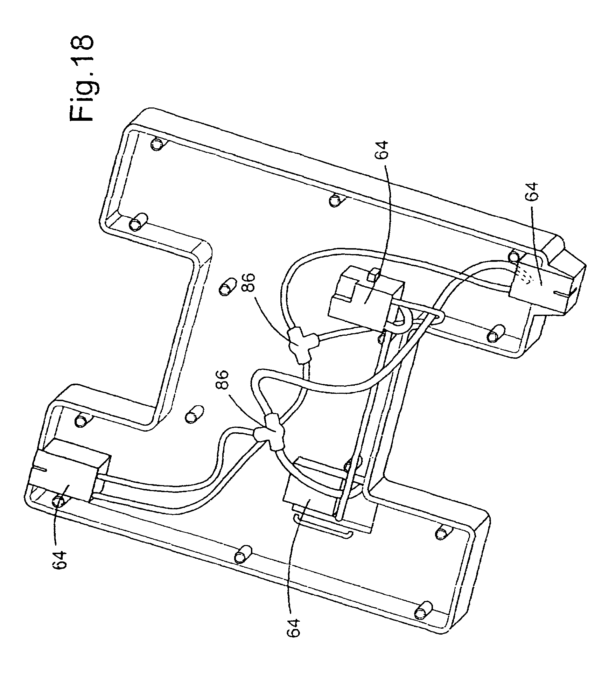

In detail, according to the preferred embodiment of the Figures, the mentioned fast connection or joint means 54 comprise said box-shaped protuberance housing a connector 64, shown in Figures from 12 to 16 and in Figures 17 and 18 showing a plurality of such connectors integrated into one of the plate-shaped connection elements 14 of the units 12.

The connector 64 comprises a box-shaped body 66 having a substantially parallelepiped shape, preferably made of stiff plastic material such as polycarbonate resin which is at least partly open on the opposite upper and lower faces. The upper face of the box-shaped body 66 defines two coupled seats 68, 70 housing as many electric contact elements 72, 74 which longitudinally extend into the same body and parallel among them.

The electric contact element 72 is constituted by a rod which is engaged to a terminal 76 in its lower end having a substantially triangular configuration whose vertical branch is folded on itself and defines a frame forming a rectangular-based seat 78 having a limited height; the base of said frame is aligned with the lower edge, marked with 66', of the box-shaped body 66.

The electric contact or rod 72 inserted into the box-shaped body 66 and connected to the terminal 76 is aligned, with its upper end, to the upper edge of the same body and centrally projects into the seat 68 constituted by a recess obtained on a side of the same body. A projecting turret 80 integrally obtained with the body 66 and whose height corresponds to the one of the edge, marked with 82, delimiting the same seat 68 is placed alongside the seat 68, the turret 80 is provided with a central pass-through hole which constitutes said seat 70 for the electric contact 74. The latter consists in a shaped body wherein the lower end defines a terminal 84 similar to the seat 78 of the terminal 76; from the terminal 84 two integral and coupled tubular sectors develop, one of which faces the seat 70. The terminal 84 of the electric contact 74 is aligned to the base or lower edge 66' of the body 66.

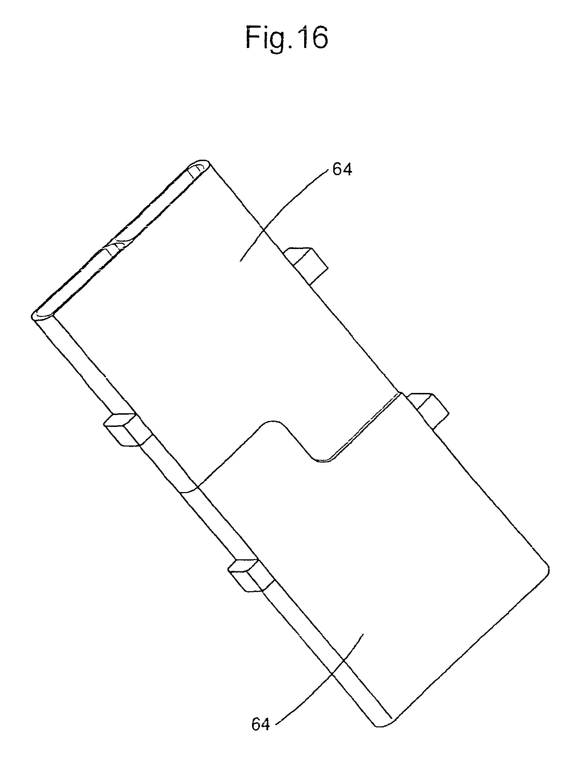

At the base the turret 80 is delimited by an edge 82' which is lowered compared to the edge 82 delimiting the seat 68; the edge 82' forms an abutment surface for a further connector 64 coupled to the first one with a groove-and-tongue joint as schematized in Figure 16.

Through the connectors 64 placed along the plate-shaped elements 14 the electric connections are carried out in the known way through a plurality of cables, as schematized by way of example in Figure 18; the cable harness can be initially or subsequently pre-arranged by a specialised staff, in order to obtain a series or a parallel connection. The ends of the electric cables are obviously provided with known terminals complementary to the ones previously marked with 74 and 76; which are also known, and therefore they are not described in detail and they are the three-way electric connection elements, schematized with 86 in Figure 18.

According to the embodiment described above, the power station of the present invention is advantageously constituted by components which can be immediately matched among them, without using particular tools, according to the specific requirements, thanks to the casings or containment bodies 16 of each electric modules 12, their lids 24, the base 38 and connection or fast coupling terminals 46, 48, 60. The installed power which can be supplied in time can be easily increased, in a range which is at least comprised between 700 Watt x 40' or 2100 Watt x 7' and 700 Watt x 200' or 2100 Watt x 50' and a voltage in a range preferably comprised between 12 and 96V., thus keeping constant the overall size of the base surface, provided that each couple of modules 12 which constitutes each single level can be overlapped as schematized in Figures 1 and 2, thus fully exploiting the available space in the standardized electric cupboards/panels. According to said preferred embodiment, the sizes of each single level of the power station, constituted by two matched modules 12 with interposition of a plate-shaped element 12, are widely compatible with the standards of said cupboards/panels and are roughly comprised between 390 and 190 and 200 mm respectively for width - depth and height. According to the above-cited features it is also possible to advantageously connect any electronic conversion module in plug-in mode or the like to the power station of the present invention.

Even though the present invention as been described above with reference to one embodiment, which is given only by way of non-limitative example, many changes and variants will be clear to a technician according to the above-mentioned description. Therefore the present invention is meant to include all the changes and variants falling within the spirit and the protective scope of the following claims.

## Claims

1. A modular and sectional power station (10), which can be used particularly in emergency conditions to feed electric and electronic equipments, **characterized in that** it comprises at least two electric modules (12) and at least a power and control unit (39), said electric modules being constituted by one or more batteries or electric units (12') integrated into a containment casing (16) aligned among them on the same level and electrically connected through connection means (14), the base surface of said at least two electric modules (12) being constant at the change of the electric power which can be supplied in time.

2. The power station according to claim 1, **characterized in that** the base surface of at least two electric modules (12) is constant at the change of the electric power which can be supplied in time in a range comprised at least between 700 Watt x 40' or 2100 Watt x 7' and 700 Watt x 200' or 2100 Watt x 50'.

3. The power station according to claim 2, **characterized in that** the base surface of at least two electric modules (12) is constant at the change of the electric power which can be supplied in time in range comprised at least between 700 Watt x 40' or 2100 Watt x 7' and 700 Watt x 200' or 2100 Watt x 50' and a voltage in a range comprised at least between 12 and 96V.

4. The power station according to the previous claims, **characterized in that** said containment case (16) has a quadrangular-based cup configuration and is overlapped by lid (24) closing and delimiting the upper face of each module (12) and, in correspondence with the open lower base, is provided with integral projections (30) inserting into the same casing (16) in correspondence with its vertexes.

5. The power station according to the previous claims, **characterized in that** the connection means (14) which electrically connect two electric modules (12) are constituted by a plate-shaped element formed by two complementary half-shells (14') which are jointly fixed between them or by equivalent means, at least one of which being provided with electric connection means (44) on the inner side such as cables, reeds and/or terminals connected to terminations (46-48), said plate-shaped element (14) being substantially "H"-shaped.

6. The power station according to one or more of any of the previous claims, **characterized in that** each of said casings (16) and/or lids (24) is provided, along its side surface, with a shaped notch (50-52) with a vertical development from which at least an electric connection contact (60) derived from cables (18-20) of each module (12) projects.

7. The power station according to claim 5, **characterized in that** said terminations (46-48) project or approach to the end of the opposite and parallel branches (40-42) of each of the plate-shaped elements (14).

8. The power station according to one or more of any of the previous claims, **characterized in that** each connection means (14), on the opposite faces, is provided with fast jointly fixed or pressure connection means (54) of the single modules (12).

9. The power station according to claim 8, **characterized in that** said fast connection means (54) comprise a box-shaped protuberance housing a connector (64) comprising a parallelepiped box-shaped body (66) made of plastic or any other suitable material and open at least partly on the opposite upper and lower face, the upper face of the box-shaped body (66) defining two coupled seats (68), (70) housing as many electric contact elements (72), (74), longitudinally extending into the same body and being parallel among them.

10. The power station according to claim 9, **characterized in that** the electric contact element (72) is constituted by a rod which at its lower end is inserted into a substantially triangular-shaped terminal (76) whose vertical branch is folded onto itself and defines a frame forming a rectangular-based seat (78) with a limited height and a base aligned with the lower edge (66') of the box-shaped body (66), the electric contact or rod (72) inserted into the box-shaped body (66) and connected to the terminal (76) being aligned, with its upper end, to the edge of the same body and centrally projecting into the seat (68) constituted by a recess obtained on a side of the same body.

11. The power station according to claims 9 and 10, **characterized in that** a projecting turret (80) is placed alongside to the seat (68) and is integrally obtained with the body (66) whose height corresponds to the one of the edge (82) delimiting the same seat (68) provided with a central pass-through hole making said seat (70) for the electric contact (74) constituted by a shaped body wherein the lower end defines a terminal (84) from which two integral and coupled tubular sectors develop, one of which facing the seat (70), the terminal (84) of the electric contact (74) being aligned at the base or lower edge (66') of the body (66).

12. The power station according to claim 11, **characterized in that** the turret (80) is delimited at the base by an edge (82') being lowered compared to the edge (82) delimiting the seat (68), said edge (82') forming an abutment surface for a further connector (64) coupled with the first one by means of a groove-and-tongue joint.

13. The power station according to one or more of any of the previous claims, **characterized in that** the two electric modules (12) are supported in their lower part by a plate (38), the base of the containment casing (16) being provided with a peripheral lowering forming a curb (32) complementary to a lowering (34) obtained on the base or upper face of the lid (24).

14. The power station according to any of the previous claims, **characterized in that** said upper face of the lid is provided with pass-through openings or slits (36).

15. The power station according to one or more of any of the previous claims, **characterized in that** it is constituted by a plurality of couples of electric modules (12) overlapped among them and connected through said plate-shaped elements (14).
